(19) Europäisches Patentamt

European Patent Office

Office européen des brevets

(11) **EP 1 731 930 A1**

(12) **EUROPEAN PATENT APPLICATION**
published in accordance with Art. 158(3) EPC

(43) Date of publication:
**13.12.2006 Bulletin 2006/50**

(51) Int Cl.:
**G02B 5/08** (2006.01)     **G02B 5/02** (2006.01)
**G02F 1/1335** (2006.01)

(21) Application number: **05727589.3**

(22) Date of filing: **30.03.2005**

(86) International application number:
**PCT/JP2005/006090**

(87) International publication number:
**WO 2005/096036 (13.10.2005 Gazette 2005/41)**

(84) Designated Contracting States:
**DE FR GB NL**

(30) Priority: **30.03.2004 JP 2004099098**

(71) Applicant: **Asahi Kasei Kabushiki Kaisha
Osaka-shi,
Osaka 530-8205 (JP)**

(72) Inventor: **AKAISHI, Kazuo
5140062 (JP)**

(74) Representative: **Brookes Batchellor LLP
102-108 Clerkenwell Road
London EC1M 5SA (GB)**

(54) **REFLECTIVE SHEET AND METHOD FOR PRODUCING SAME**

(57)     Disclosed is a reflective sheet which contains a resin composition including not less than 50 volume% and less than 80 volume% of a polypropylene resin (A) and not less than 20 volume% and less than 50 volume% of a resin (B) which causes phase separation from the polypropylene resin at a temperature at which the polypropylene resin can be stretched, and has a pore inside.

The reflective sheet is **characterized in that**, in a cross section of the reflective sheet in the thickness direction, the standard deviation of the ratio (X/Z) between the length (X) in the plane direction and the length (Z) in the thickness direction of the resin (B) phase is not less than 0.2.

**Description**

TECHNICAL FIELD

The present invention relates to a reflective sheet of a resin composition containing pores inside, and specifically relates to a reflective sheet which is suitable for a reflective material used in the backlight or the like of a liquid crystal display device.

BACKGROUND ART

Since liquid crystals do not by themselves emit light, a light source is required so as to use a liquid crystals as a display device. Liquid crystal display devices are composed of a liquid crystal panel composed of liquid crystal, an alignment plate, electrodes, a polarizing plate and the like, and a device for irradiating light onto the panel, such as a lighting system commonly called a "backlight". A reflective sheet is employed to make the light from a lamp reflect efficiently back towards the screen, or the like.
Backlights for a liquid crystal display device can generally be broadly classified into two kinds: edge-light backlights and direct backlights.
Edge-light backlights are often employed in compact liquid crystal display devices which are used in mobile phones or personal digital assistants. Edge-light backlights are usually configured from a light source, such as a light emitting diode or a cold cathode fluorescent lamp, a light path commonly referred to as a light guide plate made from a transparent resin such as acrylic resin and which is shaped into a wedge shape, and a reflective material provided on a side face of the light guide plate on the side face opposite to the liquid crystal panel.
In edge-light backlights the light source, such as the light emitting diode or cold cathode fluorescent lamp, is often placed in a position adjacent to the edge of the light guide plate, whereby light from the light source is made incident from the light guide plate edge. Light incident on the light guide plate exits the light guide plate from a light guide plate side face in the course of passing through the light guide plate. Light which exited from the side face on the liquid crystal panel side of the light guide plate illuminates the liquid crystal panel. However, since light which exited from the side face opposite to the liquid crystal panel side of the light guide plate is unable to illuminate the liquid crystal panel, a reflective sheet for reflecting light is usually provided on the side face opposite to the liquid crystal panel side of the light guide plate, whereby light exiting from the light guide plate side face is reflected onto the liquid crystal panel side to thereby effectively illuminate the liquid crystal panel with light from the light source.
Since devices such as mobile phones and personal digital assistants are often used outside, in situations where the liquid crystal display device is illuminated by external light from the sun or the like which is brighter than the liquid crystal display device light source, the liquid crystal display device screen may be difficult to view. Thus, a reflective sheet having a high reflectance is typically provided behind the liquid crystal panel so that the bright light such as sunlight which is incident on the liquid crystal display device is reflected to make the liquid crystal display screen easier to view.
Direct backlights have a plurality of light source lamps, such as cold cathode fluorescent lamps, aligned on the side opposite to the display screen of the liquid crystal panel, and are often employed in the large screen liquid crystal display devices used for large screen televisions or the like. Since there are limits on the brightness of the light source lamps used to increase luminance to a satisfactory level for edge-light backlights, large screen liquid crystal display devices normally employ direct backlights using a plurality of light source lamps. Since light from the light source lamps is also irradiated onto the side opposite to the liquid crystal side, in direct backlights a reflective sheet is typically provided on the side opposite to the liquid crystal side of the light source lamp so that light from the light source can be effectively irradiated onto the liquid crystal panel.
Recently, dynamic images are increasingly displayed not only on televisions but also on computers as well, so that there is a need for even brighter liquid crystal display devices. Thus, for the backlight used in a liquid crystal display device, a reflective sheet or film having a reflectance of not less than 90% is often used.
In order to increase the brightness of liquid crystal display devices, the output of the light source such as a cold cathode fluorescent lamp has a trend to increase, meaning that the temperature of the backlights in use will tend to become higher. For this reason, it is necessary for the resin used in a reflective sheet to have a heat resistance of about 80°C, which is roughly the upper temperature limit of the liquid crystal material. Thus, for a reflective sheet used in a backlight for a liquid crystal display device, a composition that is easily molded into a sheet yet also has excellent heat resistance has been required.
Further, for a backlight used in the large screen liquid crystal display device of a large screen television or the like, the reflective sheet, which has a large surface area, is bombarded with strong light over a long period of time. Thus, for the reflective sheet, a reflective sheet has been required which does not discolor or deteriorate, and tend not to warp or change shape due to rising temperatures or moisture absorption over a long period of time.
Resin sheets which contain pores or air bubbles inside are well known to appear to look white when irradiated with light from the light being reflected, and to exhibit pearl-like glossiness.

Known examples of sheets of a resin composition which contains pores or air bubbles in its interior include (1) sheets formed with pores in the resin interior by stretching a resin having an inorganic powder incorporated and separating the interface between the resin and the inorganic powder; and (2) sheets formed with air bubbles inside of the resin by dissolving an inert gas under pressure into the resin, and then lowering the pressure to cause the bubbles to form.

Examples of the resin sheet (1) include, as disclosed in Patent Document 1 for example, a sheet of white polyethylene terephthalate whose void ratio is 7 to 30% as calculated from density, produced by extruding in a molten state polyethylene terephthalate having 5 to 30% by weight of calcium carbonate microparticles and then subjecting the extruded product to biaxial stretching.

Examples of the resin sheet (2) include, as disclosed in Patent Document 2 for example, a light-reflective sheet which contains tiny air bubbles in its interior, by dissolving an inert gas, such as carbon dioxide, under a pressurized atmosphere into a thermoplastic polyester, and then heating under atmospheric pressure to cause bubbles to form.

The reason why a resin which contains pores or air bubbles in its interior reflects light well is thought to be as follows.

The refractive index of a resin is about 1.4 to 1.6. The refractive index of air is about 1. Therefore, the reflectance of light caused by the difference between the resin and air refractive indexes is only about 4% per reflection. However, in a sheet of a resin which contains many pores or air bubbles inside, light irradiated onto the sheet will be reflected many times inside of the sheet because many interfaces between the resin and air exist inside. As a result, in a sheet of a resin which contains many pores or air bubbles inside, a large proportion of the irradiated light is reflected inside of the sheet, whereby it is believed that the reflectance of the sheet as a whole increases.

Further, in a sheet of resin which contains many pores or air bubbles in its interior, in many cases the pores or air bubbles will be of varying shapes or sizes, so that the light which is reflected at the pore or air bubble interfaces is rarely reflected together in a single direction. This means that the direction of the reflected light tends to be different for each pore or air bubble. Thus, the reflection when light is irradiated onto a sheet of a resin which contains many pores or air bubbles in its interior easily becomes diffuse reflection whose incident light is reflected in every direction.

In contrast to diffuse reflection, reflection wherein the angle at which light is incident on a reflection surface is symmetrical with the angle at which light is reflected from the reflection surface is referred to as "mirror reflection". The reflection surface of a mirror reflective sheet takes on a mirrorlike surface. Known examples of resin sheets which exhibit mirror reflection include a sheet having a surface of a polyester resin sheet which has been coated by vapor deposition with a substance whose reflectance is large, such as silver; or a reflective sheet wherein several hundred layers of resins having differing refractive indexes are laminated in a thickness that is smaller than the wavelength of visible light.

A sheet of a resin which has a large light reflectance can be used as the reflective material in a reflector for a projector, a headlight or other such lamp, or as the reflective material in the backlight of a liquid crystal display device.

Reflective sheets of a resin which satisfies these conditions consist of a polyester resin or a polypropylene resin, such as a reflective sheet like the above-described (1) containing pores inside by adding an inorganic powder into a resin and then stretching; such as a reflective sheet like the above-described (2) containing air bubbles in its interior by dissolving an inert gas into the resin to form bubbles; as well as a reflective sheet (3) formed by coating silver or the like onto a resin sheet.

For the reflective sheet (1), since an inorganic powder such as calcium carbonate or barium sulfate is incorporated in a large ratio of several tens of percent by volume of the entire reflective sheet, there will be many cases where the some of the inorganic powder protrudes from the surface of the reflective sheet. When a sheet such as this is used in an edge-light backlight, in the step where the reflective sheet and the light guide plate are stuck together, the light guide plate surface will be prone to being damaged by the some of inorganic powder protruding from the surface of the reflective sheet. Further, the inorganic powder can detach from the reflective sheet surface or edge, and adhere to the reflective sheet surface or backlight surface, whereby dots appear on liquid crystal screen, which can cause the picture quality of the display screen to deteriorate.

The reflective sheet (2) is a reflective sheet consisting of a resin which does not contain an inorganic powder. However, in order to dissolve the inert gas into the resin sheet, it is necessary to leave the resin sheet for a certain period of time under a pressurized atmosphere, and a step is also required of forming the bubbles by removing the sheet in which an inert gas has been dissolved to return to an atmospheric pressure, and then applying heat.

In addition to the production steps for a typical resin sheet of extruding the resin in sheet form and stretching with a stretching machine, it is necessary to carry out the above-described steps of dissolving a gas and forming bubbles, which can easily result in the production process becoming extensive and complex.

The reflective sheet (3) is susceptible to having the metal particles such as silver which coat the surface of the resin sheet agglomerate due to heat from the light source lamp during use, or being oxidized by an acidic gas component contained in minute amounts in air, whereby it is known for the silver or such metal to discolor or for reflectance to deteriorate. In view of this, a resin is coated over the metal particles of silver or the like to prevent their contact with air where the particles cover the surface of the sheet. Because such a step for thinly coating the metal and resin several times onto the surface of the resin sheet is necessary, the production process is likely to be extensive and complex. Moreover, if a reflective mirror sheet like the sheet (3), which produces mirror reflection, is used for a direct backlight employed in a large screen liquid crystal display device such as that in a large screen television or the like, it is known that interference is caused between light waves from the plurality of light source lamps disposed therein whereby unevenness in the brightness of the liquid crystal screen is more likely to occur. For this reason reflective sheets which produce diffuse reflection are often used for direct backlights.

Although the above-described reflective sheets (1) and (2) are reflective sheets which produce diffuse reflection, a reflective sheet is desired for producing diffuse reflection which has overcome the above-described problems of damage to the light guide plate from inorganic particles added in a large quantity to the reflective sheet, or detachment of the inorganic particles, or complexity in the production process and the like.

An example of a white resin film wherein pores are formed inside without adding inorganic particles is disclosed in Patent Document 3, which describes a white biaxially-stretched polyolefin film containing 65 to 93% by weight of polypropylene and 5 to 20% by weight of a resin incompatible therewith. However, while this can be used as a white film employed in printing paper, labels or the like, it would be difficult to obtain reflectance high enough to be used in a backlight of a liquid crystal display device'or the like.

Patent Document 1:    JP-B-6-89160
Patent Document 2:    Japanese Patent No. 2925745
Patent Document 3:    Japanese Patent No. 3139510

DISCLOSURE OF THE INVENTION

PROBLEM TO BE SOLVED BY THE INVENTION

It is an object of the present invention to provide a diffuse reflective sheet having a high reflectance and consisting of a resin composition which does not contain large amounts of inorganic powder.

MEANS FOR SOLVING THE PROBLEM

As a result of extensive research into resolving the above-described problems, the present inventor arrived at the present invention by finding that a sheet formed with pores inside by stretching a resin composition at least half of which consists of a polypropylene resin (A) and the balance of which consists of a resin (B) which causes phase separation from the polypropylene resin at a temperature at which the polypropylene resin can be stretched, such sheet possessing a distribution in the ratio between length in a plane direction and length in a thickness direction of the resin (B) phases, is a sheet which produces a diffuse reflection phenomenon as a result of the pores formed in the interior, exhibits high diffuse reflectance without containing a large amount of inorganic powder, and which can be obtained with common and simple stretched resin sheet or film production equipment wherein raw material resins are melted and extruded, and the resultant sheet is stretched.

That is, the present invention is as follows.

(1) A reflective sheet comprising a resin composition comprising not less than 50% by volume and less than 80% by volume of a polypropylene resin (A) and not less than 20% by volume and less than 50% by volume of a resin (B) which causes phase separation from the polypropylene resin at a temperature at which the polypropylene resin can be stretched, and having pores inside, and characterized in that, in a cross section of the reflective sheet in a thickness direction, the standard deviation of the ratio (X/Z) between the length (X) in the plane direction and the length (Z) in the thickness direction of resin (B) phase is not less than 0.2.

(2) The reflective sheet according to (1), wherein the resin (B) has a higher elastic modulus than the polypropylene resin at a temperature at which the polypropylene resin can be stretched.

(3) The reflective sheet according to (1) or (2), wherein the resin (B) is a polycarbonate resin.

(4) The reflective sheet according to any one of (1) to (3), wherein the resin composition comprises not less than 50% by volume and less than 65% by volume of the polypropylene resin (A) and not less than 35% by volume and less than 50% by volume of the resin (B) which causes phase separation from the polypropylene resin at a temperature at which the polypropylene resin can be stretched.

(5) The reflective sheet according to any one of (1) to (4), wherein the resin composition further comprises a polystyrene resin, the sum of the resin (B) which causes phase separation from polypropylene resin at a temperature at which the polypropylene resin can be stretched and the polystyrene resin being not less than 20% by volume and less than 50% by volume, and comprises not less than 5% by volume of the polystyrene resin.

(6) The reflective sheet according to any one of claims 1 to 5, having a reflectance of not less than 90%.

(7) The reflective sheet according to any one of claims 1 to 6, which is stretched at an areal stretching ratio of not more than 18-fold.

(8) A method for producing a reflective sheet having not less than 0.2 of the standard deviation of the ratio (X/Z) between the length (X) in the plane direction and length (Z) in the thickness direction of resin (B) phase in a cross section of the reflective sheet in a thickness direction, comprising stretching a resin composition comprising not less than 50% by volume and less than 80% by volume of a polypropylene resin (A) and not less than 20% by volume and less than 50% by volume of a resin (B) which causes phase separation from the polypropylene resin at a temperature at which the polypropylene resin can be stretched, and forming pores inside.

(9) The method according to (8), wherein the resin (B) has a higher elastic modulus than the polypropylene resin at a temperature at which the polypropylene resin can be stretched.

(10) The method according to (8) or (9), wherein the resin (B) is a polycarbonate resin.

(11) The method according to any one of (8) to (10), wherein the resin composition comprises not less than 50% by volume and less than 65% by volume of a polypropylene resin (A) and not less than 35% by volume and less than 50% by volume of a resin (B).

(12) The method according to any one of (8) to (11), wherein the stretching is carried out at an areal stretching ratio of not more than 18-fold.

ADVANTAGES OF THE INVENTION

According to the present invention, a reflective sheet which does not contain large amounts of inorganic powder and which produces diffuse reflection can be provided, this reflective sheet having a high reflectance of not less than 90% which can be obtained using the common and simple production equipment for an stretched resin sheet or film.

BEST MODE FOR CARRYING OUT THE INVENTION

The present invention will now be described in more detail.

The reflective sheet according to the present invention is a reflective sheet containing a resin composition including not less than 50% by volume and less than 80% by volume of a polypropylene resin (A) and not less than 20% by volume and less than 50% by volume of a resin (B) which causes phase separation from the polypropylene resin at a temperature at which the polypropylene resin can be stretched, and having pores inside, characterized in that, in a cross section of the reflective sheet in the thickness direction, the standard deviation of the ratio (X/Z) between the length (X) in the plane direction and the length (Z) in the thickness direction of the resin (B) phases is not less than 0.2.

The polypropylene resin (A) used in the present invention is a polypropylene resin that is a propylene homopolymer or a copolymer of a monomer, such as ethylene, capable of copolymerizing with propylene. The polypropylene resin (A) is preferably a polypropylene resin having a melt flow rate of 0.1 to 10 g/min as measured at a temperature of 230°C and a load of 21.2 N according to the JIS K7210 method. From the perspective of discoloration due to the extruder load and the heat of the resin composition during the melt processing of the polypropylene resin, melt flow rate is preferably not less than 0.1 g/min, and from the perspective of the viscosity and processability of the resin, is preferably not more than 10 g/min.

From the perspective of tensile force during resin extrusion, the ratio that the polypropylene resin (A) takes up in the total resin composition is preferably not less than 50% by volume.

On the other hand, in order to obtain a reflective sheet having a high reflectance of not less than 90% by stretching an extruded resin composition to form pores in the interior of the sheet, the ratio that the polypropylene resin (A) takes up in the total resin composition is preferably less than 80% by volume.

Examples of the resin (B) which causes phase separation from a polypropylene resin at a temperature at which the polypropylene resin can be stretched include polycycloolefin resins, such as polyethylene resin, polystyrene resin, polymethyl methacrylate resin, polycarbonate resin, polymethylpentene resin, polynorbornene resin and the like; polyester resins; polyamide resins and the like. Among these resins, more preferred are resins whose elastic modulus at a temperature at which the polypropylene resin can be stretched is higher than the polypropylene resin. Examples thereof include polycycloolefin resins such as a polycarbonate resin, polymethylpentene resin and polynorbornene resin; polyester resins; polyamide resins and the like. It is preferable to employ a mixture in which at least one of these resins has been melt-mixed with the polypropylene resin, and such a resin is most preferably polycarbonate resin.

In the present invention the resin (B) is not less than 20% and less than 50% of the volume of the total resin composition. From the perspective of making the orientation tension smaller, the resin (B) is less than 50% by volume of the total resin composition. From the perspective of increasing pore number and pore volume in the sheet, and of obtaining a high reflectance, the resin (B) is preferably not less than 20% by volume of the total resin composition. From the perspective of tensile force when stretching the resin, the resin (B) is preferably less than 50% by volume of the total resin composition.

In the present invention, inorganic particles for forming pores in the interior of the resin composition are not added into the resin composition. However, it is noted that a minute quantity of about 1,000 ppm of fine silica particles or the like may be added as a lubricant for making the reflective sheet slide more easily with the rollers or guide rails of the assembly apparatus.

The reflective sheet according to the present invention can be obtained by melt-mixing not less than 50% by volume and less than 80% by volume of a polypropylene resin (A) and not less than 20% by volume and less than 50% by volume of a resin (B), extruding the resultant resin composition in a sheet form in which "islands" of resin (B) are dispersed in a "sea" of polypropylene resin (i.e., so-called "sea-island structure"), and then stretching it.

The ratio between the length (X) in the plane direction and the length (Z) in the thickness direction, in the cross section in the thickness direction of the reflective sheet, of the resin (B) phases contained in the reflective sheet according to the present invention is not fixed, but rather has a distribution. Specifically, the standard deviation of the ratio (X/Z) between X and Z is not Less than 0.2.

When the X/Z standard deviation is too large, problems are more likely to arise, such as the increase of excessively large resin (B) phases, which may cause more often the sheet to be broken when it is stretched, or the increase of excessively small resin (B) phases, which are difficult to serve as pore forming origin when it is stretched. Therefore, the X/Z standard deviation should not be too large, and is suitable not to excess about 5.

The advantages of the ratio between length (X) in the plane direction of resin (B) phases and length (Z) in the thickness direction of resin (B) phases having a distribution can be thought of as follows. When fixed-shaped resin (B) phases, such as a sphere, are dispersed in the sea phase of the polypropylene resin, there is a tendency for resin (B) phases to come into contact with each other and form an aggregate. If variously-shaped resin (B) phases are dispersed in the sea phase of the polypropylene resin, it is more difficult for an aggregate to form between resin (B) phases. Thus, compared with fixed-shaped dispersion, it is possible to include a greater number of resin (B) phases in the whole resin. As a result, when the resin (B) is dispersed in a variety of shapes the number of pores formed when stretching the resin composition is larger, thereby increasing the number of pore interfaces which reflect the light incident on the reflective sheet, whereby it is thought that it is easier to obtain reflective sheet whose reflectance is high.

When melting and extruding the polypropylene resin (A) and resin (B) pellets with an extruder, a twin-screw extruder for instance, the resin (B), which is harder than the polypropylene resin (A), is finely split from resin pellets which are usually about several mm in size into a dispersed phase of about several $\mu$m in size by the shearing force from the rotation of the screws when passing through gaps between the extruder cylinder and the screws or gaps between the screws themselves in the extruder. By appropriately setting the shape of the extruder screws, the cylinder temperature and the screw rotation speed, the average size and size distribution of the resin (B) splits can be regulated. For example, if the rotation speed of the extruder screws is set at a low level, the degree of splitting as a result of mechanical force from the raw material resin pellets is quite moderate, so that the distribution of the shape of the resin (B) phases is broad, whereby the above-described X/Z standard deviation increases.

Among the resin (B) examples, preferable are those resins whose elastic modulus at a temperature at which the polypropylene resin can be stretched is greater than the polypropylene resin. The reason for this is thought to be as follows. The present invention stretches a resin composition sheet at a temperature at which the polypropylene resin can be stretched, and then cleaves apart the interfaces between the resin (B) phases and polypropylene resin (A) phase in the resin composition, to thereby form pores in the interior of the sheet. At the temperature for stretching the sheet, if the resin (B) elastic modulus is larger than the polypropylene resin (A) elastic modulus, the deformation amount caused by stretching the resin (B) phases is smaller than the deformation amount of the polypropylene resin (A) phase, whereby it is thought that the interfaces between the resin (B) phases and polypropylene resin (A) phase are more easily cleaved apart.

Polycarbonate resin, which was cited as a preferable example of the resin (B) according to the present invention, can be one kind selected from among aromatic polycarbonates, straight-chain polycarbonates and branched polycarbonates, or these may be used together. The polycarbonate resin preferably has a melt flow rate of 0.1 to 50 g/10 min as measured at a temperature of 300°C and a load of 11.8 N according to the JIS K7210 method. From the perspective of uniform mixing with the polypropylene resin, melt flow rate is preferably not less than 0.1 g/10 min. From the perspective of easily forming the pores when stretching, the melt flow rate is preferably not more than 50 g/10 min.

Examples of resin (B) other than polycarbonate include polyamide resins. The polyamide resin can be used as one kind selected from among polyamide 66, polyamide 6, polyamide 610, polyamide 612, polyamide 11, polyamide 12 or aromatic polyamides, or these may be used together. From the perspective of dispersibility when extruding with the extruder, a polyamide resin having a melting point of not higher than 300°C is preferable.

In the present invention, a polystyrene resin can further be employed in addition to the polypropylene resin (A) and the resin (B). The polystyrene resin preferably has a melt flow rate of 0.1 to 20 g/10 min as measured at a temperature of 200°C and a load of 49 N according to the JIS K7210 method. Incorporating not more than 5% by volume of polystyrene resin with respect to the total resin composition confers the advantage of being able to simplify the processes and equipment for producing the reflective sheet, for example by lessening the rotational torque of the extruder for melt-mixing the total resin composition and lowering tension during stretching of the sheet as a result of the pores being formed in the sheet interior, without any great impact on the transparency of the total resin composition. From the perspective of lessening the rotational torque of the extruder and lowering well the orientation tension of the sheet as well as making an optically uniform sheet, the quantitative ratio of polystyrene to the total resin composition is preferably not more than 5% by volume.

In the present invention, while a resin composition is used in which a polypropylene resin (A), a resin (B), and polystyrene as required are mixed together, an ultraviolet absorber, a photostabilizer, a heat stabilizer, a nucleating agent, an antistatic agent and the like, may also be added into the resin composition as required.

The thickness of the reflective sheet according to the present invention is not especially limited. A preferable thickness is 10 to 500 $\mu$m, and a more preferable thickness is 30 to 300 $\mu$m.

The reflectance of the reflective sheet according to the present invention is not especially limited. When employing as a reflective sheet to be used in a backlight for a liquid crystal display device, the reflectance is preferably not less than 90% from the perspective of screen brightness when used in a backlight for a liquid crystal display device. When reflectance is in the above range, the luminance of the light emitting diodes or cold cathode fluorescent lamps acting as the light source for the liquid crystal display device can be effectively utilized, whereby the screen brightness can be provided well above the required level, which is preferable from the perspective of power consumption, light source heat generation and the like.

In the reflective sheet according to the present invention, the void ratio is not especially limited. When it is employed in a liquid crystal display device for an apparatus such as a mobile phone that is mainly used outside, the void ratio is preferably not less than 30% in order to reduce weight.

A preferable method of producing the reflective sheet according to the present invention is to melt a resin composition which contains not less than 50% by volume and less than 80% by volume of a polypropylene resin (A) and not less than 20% by volume and less than 50% by volume of a resin (B) which causes phase separation from the polypropylene resin, and then stretch the resultant melt. More preferable is to use a resin composition which includes not less than 50% by volume and less than 65% by volume of the polypropylene resin (A) and not less than 35% by volume and less than 50% by volume of the resin (B).

In the present invention, it is preferred to employ an extruder for mixing and melting the resin composition. The extruder is preferably a corotational twin-screw extruder, as such an apparatus is highly effective in melting and mixing the raw material resins. If a single-screw extruder is employed, it is preferable to use for the single-screw extruder screws which is provided with a mixing function on the extruder screw, such as a pin mixer or a Dulmage, or to temporarily use a twin-screw extruder to melt-mix the raw material resins for processing into pellets.

In the present invention, it is preferable to extrude the melt-mixed raw material resins in a sheet form using an extruder from a die disposed at the tip of the extruder. To stabilize the amount of resin composition being extruded, a gear pump may be employed in between the extruder and the die. In the present invention, a sheet-molding die is employed, such as a T-die or a fishtail die. The die may be a single-layer die or a laminated die. If a laminated die is employed, between the center layer and the surface layer, the ratio between the polypropylene resin (A) and resin (B) which causes phase separation from the polypropylene resin can be varied, or the added ratio of the polystyrene resin can be varied.

For example, by increasing the ratio of resin (B) in the center layer and lowering the ratio of resin (B) in the surface layer, it is easier to obtain a sheet which is more easily stretched and whose sheet reflectance is high. In addition, by adding a polystyrene resin to the surface layer, it is easier to obtain a sheet whose stretching processability is good and whose sheet reflectance is high.

In the present invention, by appropriately controlling the die temperature, the resin (B) inside of the sheet being extruded from the die is extended in the flow direction, whereby a sea-island structure can be obtained wherein the resin (B) is dispersed in the polypropylene resin sea in long, thin islands. A sheet formed with pores inside by stretching a sheet such as that described above can be conferred with the characteristic that the amount of reflected light differs depending on the direction of the sheet, a characteristic which was not seen in conventional reflective sheets.

In the present invention, preferably, the sheet extruded from the die is solidified by cooling with a cold roller or the like, and then stretched with a stretching machine. In the present invention, the operating conditions of the extruder and the die are preferably set so that the temperature of the resin being extruded is in a range of 200 to 300°C. The temperature and speed of the cold roller is preferably set so that the temperature of the extruded resin is in a range of 20 to 150°C. By stretching the sheet, not only is the interface between the resin (B) phases and polypropylene resin (A) phase in the sheet interior separated to thereby form pores inside of the sheet, but the sheet thickness can also be made thinner to a desired thickness.

From the perspective of the volume ratio that the pores take up in the total sheet, the stretching ratio is preferably not more than 18-fold. By appropriately setting the stretching ratio, the reflectance of a stretched sheet can be made as high as is possible.

In the present invention, stretching can be carried out by combining or performing separately the steps of: length-wise stretching which passes the sheet through a plurality of rollers which are rotated at different speeds for stretching the sheet in the flow direction; and transverse stretching which uses a clip tenter or the like to stretch in a width direction. Alternatively, a codirectional twin-screw extruder, such as a pantograph stretching machine, can be used to simultaneously stretch in the flow direction and in the width direction.

In order to form pores inside of the sheet in the stretching step according to the present invention, it is preferable to carry out the stretching at as low a temperature as possible. When the stretching is carried out at a high temperature, the pores have a tendency not to form as easily as compared with when stretching is carried out at a low temperature. Thus, for high-temperature stretching, it is preferable to set the stretching ratio higher than what would be the case for low-temperature stretching.

Further, by varying the stretching temperature and the stretching ratio, the present invention possesses the characteristics of being able to produce from a transparent sheet to a high reflectance highly light-shielding sheet, and of being able to freely set the ratio between reflected light and transmitted light. For example, when a resin composition, which is a combination of polypropylene resin (A) and a polycarbonate resin (B), is stretched at 155°C, a highly light-shielding sheet having a reflectance of not less than 90% can be obtained, and when it is stretched at 160°C, a low-transmission sheet having a reflectance of a few percent can be obtained. When it is stretched at a suitable temperature between 155°C and 160°C, a sheet in which half of the incident light is reflected and half is transmitted can be obtained. Moreover, when it is stretched at 157°C with the areal stretching ratio set in a range of from 1 to 10-fold, sheets having various degrees of reflectance and transmittance can be produced; for example sheets having a high transmittance whose reflectance is low; and highly light-shielding sheets whose reflectance is large.

EXAMPLES

The present invention will now be explained with reference to the Examples and Comparative Examples.

First, each of the physical properties to be measured in the present invention will be explained.

(1) Thickness

Sheet thickness was measured by using a Peacock & Co., Ltd. thickness gauge.

(2) Void Ratio

Sheet void ratio was determined by using the following formula from the true specific gravity calculated from the specific gravity and weight ratio of each of the resins used, and the apparent gravity obtained by dividing the weight of the samples by the volume obtained from the thickness and surface area of the samples.

$$\text{Void ratio (\%)} = 100 \times (1 - \text{apparent specific gravity}/\text{true specific gravity})$$

(3) Reflectance

Sheet reflectance was determined by using a reflectance measuring apparatus which combined a spectrophotometer (manufactured by JASCO Corporation) and an integrating sphere sample mount, by measuring the relative reflectance of a standard white board made from polytetrafluoroethylene ("Spectralon", manufactured by Labsphere Inc.) given a reflectance of 100% for light at a wavelength of 550 nm.

(4) Melt Flow Rate

Melt flow rate was measured in accordance with JIS K7210, under conditions of, for polypropylene resin, a temperature of 230°C and a load of 21.2 N, for polycarbonate resin, a temperature of 300°C and a load of 11.8 N, and for polystyrene resin, a temperature of 200°C and a load of 49 N.

(5) Stretching Stress

The load value applied to chucks 1 cm in width of a biaxial stretching machine which gripped a resin composition sheet whose thickness had already been measured was read during stretching of the resin composition sheet with a biaxial stretching machine (manufactured by Iwamoto Seisakusho Co., Ltd.). The maximum load value during the stretching of the resin composition sheet was recorded. The stretching stress was obtained by dividing this maximum load value by the thickness value of the resin composition sheet represented in cm units as measured prior to the stretching.

(6) X/Z Standard Deviation

A surface of a reflective sheet was cut in a perpendicular direction using a microtome or similar device, and a magnified image of the cross-section was photographed with a scanning electron microscope set to a magnification in the range of 1,000 to 10,000 times. The scanning electron micrograph was set to have a magnification so that at the very least resin (B) phases 0.5 $\mu$m in size could be confirmed by observing the photo with the naked eye. Resin (B) phases present in the interior of the pores was selected from among the resin (B) phases in the cross-section of the photographed reflective sheet, whereby the maximum length in the thickness direction and the maximum length in the plane direction of the reflective sheet resin (B) phases were determined in 0.1 $\mu$m units from measured values of the photograph lengths and the magnification ratio of the photograph.

Fifty discrete resin (B) phases having both a maximum length in the thickness direction and a maximum length in the plane direction of not less than 0.5 $\mu$m were selected from the photograph, and the maximum length (X) in the plane direction and the maximum length (Z) in the thickness direction were recorded for the individual phases. When the number of resin (B) phases having both a maximum length in the thickness direction and a maximum length in the plane direction of not less than 0.5 $\mu$m was less than 50 in one photograph, a different location in the reflective sheet was photographed with the scanning electron microscope to determine measured values for the fifty pairs of X and Z.

Fifty X/Z ratios were calculated from the obtained fifty pairs of X and Z, whereby the standard deviation was calculated.

Example 1

A raw material, which was a mixture of 52% by volume of homopolypropylene having a melt flow rate of 0.5 g/ 10 min as (A) and 48% by volume of polycarbonate having a melt flow rate of 5 g/10 min as (B), was melt-mixed using a corotational twin-screw extruder having a 30 mm neck size and an L/D of 48 under conditions of an extruder barrel temperature of 230°C and a screw rotation speed of 100 rpm. The resultant product was extruded as a 0.8 mm-thick sheet from a 300 mm-wide T-die set at a temperature of 230°C disposed at the extruder tip. The extruded sheet was received while being sandwiched by a water-cooled roller. The rotational torque of the extruder screws at this stage was 45% of the motor full capacity.

Using a pantograph biaxial stretching machine (manufactured by Iwamoto Seisakusho Co., Ltd.), the received sheet was stretched by 3-fold in the extrusion direction of the sheet and by 3-fold in a width direction of the sheet at a 155°C extruding temperature and a 10 mm/second extruding rate. The stretching stress at this stage per sheet unit cross-section calculated from the tensile force applied per 1 cm width of the sheet as measured by a tensile force gauge provided on the chucks of the stretching machine and the thickness of the sheet prior to stretching had a maximum of 590 N/cm$^2$.

The sheet turned white on stretching. The thickness of the stretched sheet was 208 $\mu$m, void ratio was 38%, and reflectance was 96%.

A light-emitting diode point light source was irradiated from directly above the obtained sheet, whereby it was confirmed that the reflected light dispersed.

The center of a sheet which had undergone these measurements was cut, and the cut open cross-section was photographed with a scanning electron microscope magnified at 3,000-fold. The X/Z standard deviation of the polycarbonate resin phase calculated from the obtained photo was 0.9.

Example 2

A sheet was formed under the same conditions as in Example 1 with the same extruder and die as in Example 1 using a raw material which was a mixture of 80% by volume of homopolypropylene having a melt flow rate of 0.5 g/ 10 min as (A) and 20% by volume of polycarbonate having a melt flow rate of 5 g/10 min as (B). The obtained sheet was stretched lengthwise by 3-fold and transversely by 4-fold at 153°C. The sheet turned white on stretching, and had a thickness of 190 $\mu$m, void ratio of 33%, and reflectance of 93%.

A light-emitting diode point light source was irradiated from directly above the obtained sheet, whereby it was confirmed that the reflected light dispersed. The X/Z standard deviation as calculated in the same manner as in Example 1 was 1.6.

Example 3

A sheet was formed under the same conditions as in Example 1 with the same extruder and die as in Example 1 using a raw material which was a mixture of 52% by volume of homopolypropylene having a melt flow rate of 0.5 g/ 10 min as (A), 43% by volume of polycarbonate having a melt flow rate of 5 g/10 min as (B), and 5% by volume of polystyrene having a melt flow rate of 1.3 g/10 min. The rotational torque of the extruder screws at this stage was 27% of the motor capacity, which was 60% of the rotational torque in Example 1 (which contained no polystyrene). The obtained sheet was stretched lengthwise by 3-fold and transversely by 3-fold at 154°C. The stretching stress at this stage was 420 N/cm², which was 71% of the stretching stress in Example 1 (which contained no polystyrene). The sheet turned white on stretching, and had a thickness of 190 μm, void ratio of 36%, and reflectance of 97%.

A light-emitting diode point light source was irradiated from directly above the obtained sheet, whereby it was confirmed that the reflected light dispersed. The X/Z standard deviation as calculated in the same manner as in Example 1 was 1.4.

Comparative Example 1

An attempt was made to stretch a sheet which had been extruded under the same conditions and equipment as in Example 1 using a raw material which was a mixture of 48% by volume of homopolypropylene having a melt flow rate of 0.5 g/10 min as (A) and 52% by volume of polycarbonate having a melt flow rate of 5 g/10 min as (B); however the sheet was broken. Further attempts were made by raising the stretching temperature in 1°C steps, but the resulting products fractured and could not be stretched. When raised to 160°C, the sheet melted. Thus a stretching temperature at which stretching was possible could not be found.

Comparative Example 2

A sheet was extruded under the same conditions as in Example 1 with the same equipment as in Example 1 using a raw material which was a mixture of 82% by volume of homopolypropylene having a melt flow rate of 0.5 g/10 min as (A) and 18% by volume of polycarbonate having a melt flow rate of 5 g/10 min as (B). The obtained sheet was stretched lengthwise by 3-fold and transversely by 3-fold at 155°C. The stretched sheet did not turn white. Further attempts were made by raising the stretching temperature in 1°C steps, but a temperature at which the sheet turned white could not be found.

Comparative Example 3

A sheet was formed under the same conditions with the same extruder and die as in Example 1 using a raw material which was a mixture of 52% by volume of homopolypropylene having a melt flow rate of 0.5 g/10 min as (A), 38% by volume of polycarbonate having a melt flow rate of 5 g/10 min as (B), and 10% by volume of polystyrene having a melt flow rate of 1.3 g/10 min. The obtained sheet was stretched lengthwise by 3-fold and transversely by 3-fold at 154°C. The sheet obtained by stretching was an uneven sheet wherein white portions and translucent portions were mixed together.

The physical properties of the sheets obtained in the Examples and Comparative Examples are shown in Table 1.

[Table 1]

Table 1

| | | Example 1 | Example 2 | Example 3 | Comparative Example 1 | Comparative Example 2 | Comparative Example 3 |
|---|---|---|---|---|---|---|---|
| Raw Material Resin | Polypropylene Resin | 52% by volume | 80% by volume | 52% by volume | 48% by volume | 82% by volume | 52% by volume |
| | Polycarbonate Resin | 48% by volume | 20% by volume | 43% by volume | 52% by volume | 18% by volume | 38% by volume |
| | Polystyrene Resin | | | 5% by volume | | | 10% by volume |

(continued)

| | | Example 1 | Example 2 | Example 3 | Comparative Example 1 | Comparative Example 2 | Comparative Example 3 |
|---|---|---|---|---|---|---|---|
| Stretching Temperature (°C) | | 155 | 153 | 154 | No possible stretching temperature found | 155 | 155 |
| Stretching Ratio | | 3-fold × 3-fold | 3-fold × 4-fold | 3-fold × 3-fold | | 3-fold × 3-fold | 3-fold × 3-fold |
| Thickness (μm) | | 208 | 190 | 190 | | Did not turn white | Mixture of white portions and portions and translucent portions |
| Void Ratio (%) | | 38 | 33 | 36 | | | |
| Reflectance (%) | | 96 | 93 | 97 | | | |
| X/Z Standard Deviation | | 0.9 | 1.6 | 1.4 | | | |

INDUSTRIAL APPLICABILITY

The reflective sheet according to the present invention is suitable and applicable to a reflective material used in a backlight of a liquid crystal display device or the like.

**Claims**

1. A reflective sheet comprising a resin composition comprising not less than 50% by volume and less than 80% by volume of a polypropylene resin (A) and not less than 20% by volume and less than 50% by volume of a resin (B) which causes phase separation from the polypropylene resin at a temperature at which the polypropylene resin can be stretched, and having pores inside, and **characterized in that**, in a cross section of the reflective sheet in a thickness direction, the standard deviation of the ratio (X/Z) between the length (X) in the plane direction and the length (Z) in the thickness direction of resin (B) phase is not less than 0.2.

2. The reflective sheet according to Claim 1, wherein the resin (B) has a higher elastic modulus than the polypropylene resin at a temperature at which the polypropylene resin can be stretched.

3. The reflective sheet according to Claim 1 or 2, wherein the resin (B) is a polycarbonate resin.

4. The reflective sheet according to any one of Claims 1 to 3, wherein the resin composition comprises not less than 50% by volume and less than 65% by volume of the polypropylene resin (A) and not less than 35% by volume and less than 50% by volume of the resin (B) which causes phase separation from the polypropylene resin at a temperature at which the polypropylene resin can be stretched.

5. The reflective sheet according to any one of Claims 1 to 4, wherein the resin composition further comprises a polystyrene resin, the sum of the resin (B) which causes phase separation from polypropylene resin at a temperature at which the polypropylene resin can be stretched and the polystyrene resin being not less than 20% by volume and less than 50% by volume, and comprises not less than 5% by volume of the polystyrene resin.

6. The reflective sheet according to any one of Claims 1 to 5, having a reflectance of not less than 90%.

7. The reflective sheet according to any one of Claims 1 to 6, stretched at an areal stretching ratio of not more than 18-fold.

8. A method for producing a reflective sheet, having not less than 0.2 of the standard deviation of the ratio (X/Z) between the length (X) in the plane direction and the length (Z) in the thickness direction of resin (B) phase in a cross section of the reflective sheet in a thickness direction comprising stretching a resin composition comprising not less than 50% by volume and less than 80% by volume of a polypropylene resin (A) and not less than 20% by volume and less than 50% by volume of a resin (B) which causes phase separation from the polypropylene resin at a temperature at which the polypropylene resin can be stretched, and forming pores inside.

9. The method according to Claim 8, wherein the resin (B) has a higher elastic modulus than the polypropylene resin at a temperature at which the polypropylene resin can be stretched.

10. The method according to Claim 8 or 9, wherein the resin (B) is a polycarbonate resin.

11. The method according to any one of Claims 8 to 10, wherein the resin composition comprises not less than 50% by volume and less than 65% by volume of a polypropylene resin (A) and not less than 35% by volume and less than 50% by volume of a resin (B).

12. The method according to any one of Claims 8 to 11, wherein the stretching is carried out at an areal stretching ratio of not more than 18-fold.

<table>
<tr><td colspan="2" align="center">**INTERNATIONAL SEARCH REPORT**</td><td colspan="2">International application No.<br>PCT/JP2005/006090</td></tr>
</table>

**A. CLASSIFICATION OF SUBJECT MATTER**
Int.Cl$^7$ G02B5/08, 5/02, G02F1/1335

According to International Patent Classification (IPC) or to both national classification and IPC

**B. FIELDS SEARCHED**

Minimum documentation searched (classification system followed by classification symbols)
Int.Cl$^7$ G02B5/08, 5/02, G02F1/1335

Documentation searched other than minimum documentation to the extent that such documents are included in the fields searched
Jitsuyo Shinan Koho        1922-1996   Jitsuyo Shinan Toroku Koho   1996-2005
Kokai Jitsuyo Shinan Koho  1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2003-160682 A  (Toray Industries, Inc.),<br>03 June, 2003 (03.06.03),<br>Full text<br>(Family: none) | 1-3,6-10,12<br>4,11<br>5 |
| Y<br>A | JP 2002-71921 A  (Toyobo Co., Ltd.),<br>12 March, 2002 (12.03.02),<br>Full text<br>(Family: none) | 1-4,6-12<br>5 |
| A | JP 2004-70117 A  (Toray Industries, Inc.),<br>04 March, 2004 (04.03.04),<br>Full text<br>(Family: none) | 1-12 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 July, 2005 (14.07.05) | Date of mailing of the international search report<br>02 August, 2005 (02.08.05) |
|---|---|
| Name and mailing address of the ISA/<br>Japanese Patent Office | Authorized officer |
| Facsimile No. | Telephone No. |

Form PCT/ISA/210 (second sheet) (January 2004)

**EP 1 731 930 A1**

**REFERENCES CITED IN THE DESCRIPTION**

**Patent documents cited in the description**

- JP 6089160 B
- JP 2925745 B
- JP 3139510 B